# EUROPÄISCHE PATENTSCHRIFT

(11) **EP 1 124 056 B1**
(45) Veröffentlichungstag und Bekanntmachung des Hinweises auf die Patenterteilung: **29.10.2003**
(21) Anmeldenummer: 00126249.2
(22) Anmeldetag: 01.12.2000
(51) Int. Cl.: F02M 37/22

(54) **Filtereinrichtung für Kraftstoffe**
Fuel filter
Filtre à carburant

(30) Priorität: 12.02.2000 DE 10006353
(43) Veröffentlichungstag der Anmeldung: 16.08.2001
(73) Patentinhaber: ROBERT BOSCH GMBH, 70442 Stuttgart (DE)
(72) Erfinder: Juara, Candido, 28806 Madrid (ES); Sancho De Castro, Manuel, 37007 Salamanca (ES)

(56) Entgegenhaltungen:
- GB-A- 256 239
- GB-A- 2 114 237
- NL-A- 7 315 443
- US-A- 3 507 098
- US-A- 3 931 011
- US-A- 4 497 714
- US-A- 5 110 460
- PATENT ABSTRACTS OF JAPAN vol. 017, no. 686 (M-1529), 15. Dezember 1993 (1993-12-15) -& JP 05 231257 A (TOYOTA MOTOR CORP), 7. September 1993 (1993-09-07)

## Beschreibung

### Stand der Technik

Die Erfindung geht aus von einer Filtereinrichtung zum Abscheiden von Wasser und anderen Verunreinigungen aus flüssigem Kraftstoff nach der im Oberbegriff des Anspruchs 1 näher angegebenen Gattung.

Es ist schon eine solche Filtereinrichtung zum Abscheiden von Wasser aus flüssigem Kraftstoff aus der GB 21 142 37 A bekannt, bei der in einem Gehäuse ein Filterelement und ein Wasserabscheider integriert angeordnet sind. Dabei ist unterhalb dem axial durchströmten Wickelelement im Gehäuse ein Sammelraum für Wasser angeordnet. Ein als Wasserabscheider dienender, konischer Umlenkschirm zwischen Wasserspeicherraum und Wickelelement zwingt dabei den Kraftstoffstrom zu einer Strömungsumlenkung, bei der eine Wasserausscheidung aus dem Kraftstoff erzielt wird. Obwohl diese Bauart des Wasserabscheiders integriert in den Filter eine kompakte, vorteilhafte Bauweise ergibt, ist von Nachteil, dass sich damit kein befriedigender Abscheidungsgrad von Wasser aus dem Kraftstoff, insbesondere Dieselkraftstoff, erreichen läßt; dies gilt vor allem bei größeren Kraftstoff - Durchflüssen. Ungünstig ist ferner, dass der Umlenkschirm im Kraftstoffstrom dem Filterelement vorgeschaltet ist, sodass über das Mittelrohr in den Wasserspeicherraum einströmender Kraftstoff Wassertröpfchen mitreißen kann und über den Ringspalt zwischen Gehäuse - Innenwand und Außenrand des Umlenkschirms in das Filterelement mitführt, von wo die Wassertröpfchen u. U. auf die Reinseite zum Ablauf mitgerissen werden können. Dies kann vor allem bei großen Durchflüssen und bei einem erhöhten Druckgefälle über dem Filterelement erfolgen und störend wirken. Da das im Wasserspeicherraum abgeschiedene Wasser von der sich dort umkehrenden Kraftstoffströmung berührt werden kann, muß das Gehäuse mit dem Wasserspeicherraum relativ groß bauen, um einen brauchbaren Abscheidungsgrad von Wasser zu erreichen. Ungünstig bei dieser Strömungsrichtung, bei welcher der Umlenkschirm dem Filterelement vorgeschaltet ist, ist ferner, dass die Bewegungsrichtung der vom Rand des Umlenkschirms abtropfenden Wasserteilchen entgegen der Strömungsrichtung des Kraftstoffs verläuft und somit die Wasserabscheidung behindert wird. Ferner baut die einteilige Ausführung von Lochscheibe- und Umlenkschirm relativ aufwendig und ist wenig montagefreundlich. Auch muß der Ringspalt zwischen Umlenkschirm und Innenwand des Gehäuses relativ groß ausgelegt werden, da der gesamte Kraftstoffstrom hindurchströmen muß und andererseits die Wasserabscheidung möglichst wenig behindert werden soll.

Aus den DE-A1 27 544 72 und 32 272 00 sind Reiniger zum Abscheiden von Wasser aus Kraftstoff bekannt, die ohne einen eigenen, besonderen Filtereinsatz auskommen und einen trichterförmigen Umlenkschirm im Gehäuse aufweisen. Hier wird zwar der Kraftstoffstrom in günstiger Weise so geführt, dass er nach dem Durchströmen des Ringspalts zwischen Gehäuse-Innenwand und Außenrand des Umlenkschirms über einen zentralen Durchlaß im Umlenkschirm abströmt, wodurch sich ein besserer Wasserabscheidungsgrad erreichen läßt. Von Nachteil ist jedoch, dass solche Reiniger aufwendig und teuer bauen und im Betrieb ein zusätzliches Filter erfordern, sodass ein System mit zwei Modulen entsteht, die zudem viel Bauraum beanspruchen.

### Vorteile der Erfindung

Die erfindungsgemäße Filtereinrichtung zum Abscheiden von Wasser und anderen Verunreinigungen aus flüssigem Kraftstoff mit den kennzeichnenden Merkmalen des Hauptanspruchs hat demgegenüber den Vorteil, dass sie eine einfache und kompakte Bauweise von Filter mit Wasserabscheider erlaubt, die selbst bei großen Durchflußströmen noch einen hohen Abscheidegrad von Wasser erreicht. Durch die Führung des Kraftstoffstroms im wesentlichen radial zwischen zwei Umlenkschirmen läßt sich dabei eine besonders wirksame Wasserabscheidung erreichen. Dies gilt auch bei größeren Kraftstoff-Durchflußströmen, da die sich abscheidenden Wassertröpfchen nicht mehr von der eigentlichen Kraftstoffströmung gestört werden können, sondern am Rand des unteren Umlenkschirms in einen Bereich mit sehr beruhigter Strömung geraten und ungestört zum Wasserspeicherraum abtropfen können. Durch die doppelte Anordnung der Umlenkschirme ist das abgeschiedene Wasser im Sammelraum gut gegenüber der Kraftstoffströmung abgeschirmt, sodass abgespeichertes Wasser nicht mehr mitgerissen werden kann, zumal der untere, erste Umlenkschirm als durchgehende, ununterbrochene Fläche ausgebildet ist. Der Ringspalt des unteren, ersten Umlenkschirms wird nicht mehr von dem vom Einlaß zum Auslaß fließenden Kraftstoffstrom durchströmt und kann daher zum Schutz des abgespeicherten Wassers relativ eng ausgebildet werden. Die Filtereinrichtung ermöglicht durch die Integration von Filter und Wasserabscheider eine relativ einfache und kostengünstige Bauweise, bei der bisherige, serienmäßige Bauelemente unverändert weiterverwendbar sind.

Durch die in den Untersansprüchen aufgeführten Maßnahmen sind vorteilhafte Weiterbildungen und Verbesserungen der im Hauptanspruch angegebenen Filtereinrichtung möglich. Dabei sind Ausbildungen nach den Ansprüchen 2 bis 8 besonders vorteilhaft, da sie eine zweckmäßige Führung des Kraftstoffstroms im Gehäuse unterstützen, sodass eine gute Wasserabscheidung begünstigt wird. Ferner sind Ausbildungen nach den Ansprüchen 9 bis 15 besonders zweckmäßig, da sie eine einfache, kostengünstige und platzsparende Bauweise der Filtereinrichtung unterstützen und eine gute Handhabung und leichte Montage ihrer Bauelemente ermöglichen.

### Zeichnung

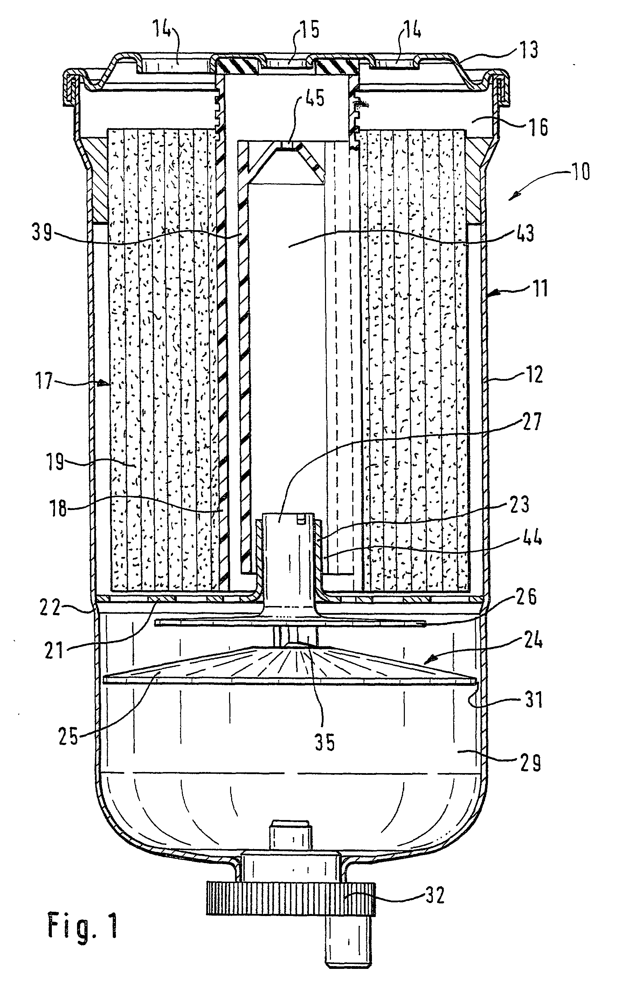

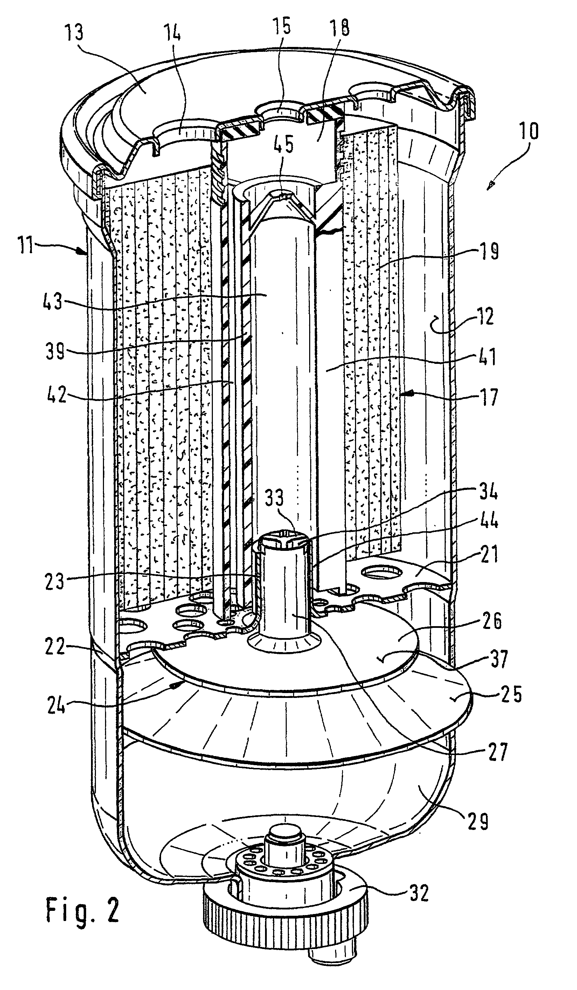

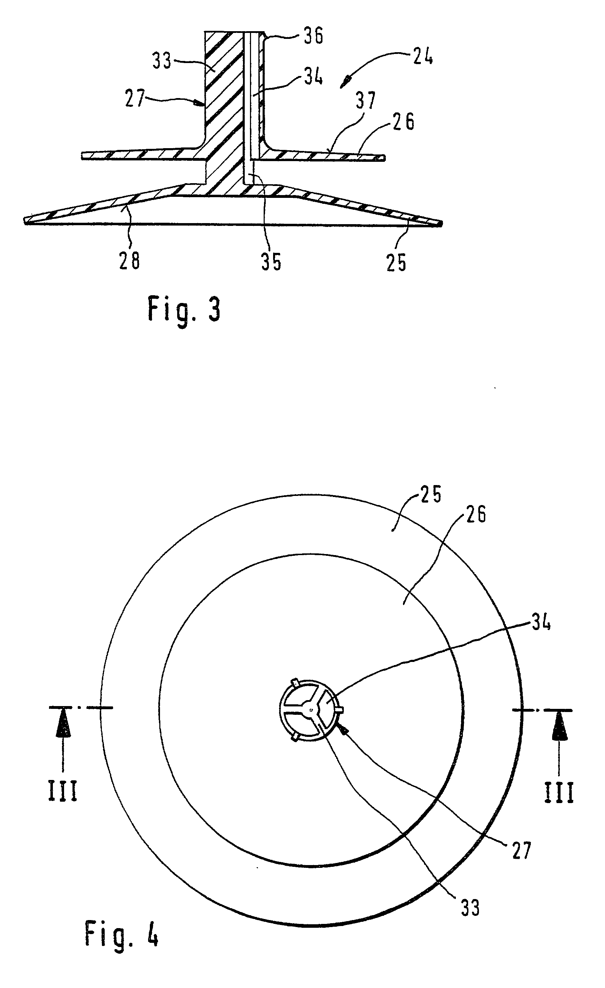

Ein Ausführungsbeispiel der Erfindung ist in der Zeichnung dargestellt und in der nachfolgenden Beschreibung näher erläutert. Es zeigen Figur 1 einen Längsschnitt durch ein erstes Ausführungsbeispiel der Filtereinrichtung in vereinfachter Darstellung, Figur 2 eine Schrägansicht der geschnittenen Filtereinrichtung nach Figur 1, Figur 3 einen Längsschnitt durch den Wasserabscheider nach Figur 1 und Figur 4 eine Draufsicht auf den Wasserabscheider nach Figur 3.

### Beschreibung des Ausführungsbeispiels

Die Figur 1 zeigt in vereinfachter Form einen Längsschnitt durch eine Filtereinrichtung 10 zum Abscheiden von Wasser und anderen Verunreinigungen aus flüssigem Kraftstoff. Die Filtereinrichtung 10 ist nach Art eines Boxfilters ausgebildet, wie sie zum Reinigen von Dieselkraftstoff verwendet wird. Die Filtereinrichtung 10 hat ein Gehäuse 11, dessen becherförmiges Gehäuseteil 12 an seinem offenen Rand durch einen Deckel 13 dicht und fest verschlossen ist. In dem Deckel 13 sind die Anschlüsse 14 für Zulauf und 15 für den Ablauf des Kraftstoffs angeordnet.

Das Gehäuse 11 nimmt in seinem Innenraum 16 ein axial durchströmtes Filterelement 17 auf, das in bekannter Weise so angeordnet ist, dass es zwischen den Zulauf und den Ablauf 15 geschaltet ist. Das Filterelement 17 selbst besteht aus einem auf einem Mittelrohr 18 angeordneten Wickel 19. Das Filterelement 17 ist mit seinem Mittelrohr 18 zwischen dem Deckel 13 auf der einen Seite und einer Lochscheibe 21 auf der anderen Seite angeordnet und abgestützt. Die Lochscheibe 21 ist dabei an einer Schulter 22 des becherförmigen Gehäuseteils 12 gehalten. Ferner weist die Lochscheibe 21 einen zentralen Rohrstutzen 23 auf, der in das Mittelrohr 18 hineinragt. Der Durchmesser dieses Rohrstutzens 23 ist dabei wesentlich kleiner als der Durchmesser des Mittelrohrs 18.

Wie die Figur 1 in Verbindung mit Figur 2 näher zeigt, die eine perspektivische Schrägansicht der geschnittenen Filtereinrichtung 10 in vereinfachter Form darstellt, ist in dem Teil des Innenraums 16 unterhalb der Lochscheibe 21 ein Wasserabscheider 24 angeordnet. Der Wasserabscheider 24 als solcher ist in Figur 3 in einem Längsschnitt nach III-III in Figur 4 dargestellt, während die Figur 4 eine Draufsicht auf den Wasserabscheider nach Figur 3 zeigt. Auf diese Figuren 2 bis 4 wird ebenfalls Bezug genommen.

Der Wasserabscheider 24 ist zweckmäßigerweise als einstückiges Teil aus Kunststoff, insbesondere als Spritzteil, ausgeführt. Der Wasserabscheider 24 weist einen unteren, ersten Umlenkschirm 25 sowie einen davon im Abstand liegenden zweiten Umlenkschirm 26 auf, die einen gemeinsamen, zentralen, hohlen Befestigungsstutzen 27 aufweisen. Mit diesem Befestigungsstutzen 27 ist der Wasserabscheider 24 in den Rohrstutzen 23 eingesteckt und damit lösbar und gehäusefest gehalten.

Wie die Figur 1 in Verbindung mit Figur 3 näher zeigt, ist der untere, erste Umlenkschirm 25 konisch ausgebildet, während sich der erste Umlenkschirm 25 im wesentlichen in einer radialen Ebene erstreckt, sodass sich der Abstand zwischen den beiden Umlenkschirmen 25 und 26 von außen nach innen zu gesehen verringert. Beide Umlenkschirme 25, 26 sind als kreisförmige Teller ausgeführt, wobei der Außendurchmessser des ersten Umlenkschirms 25 wesentlich größer ist als derjenige des zweiten Umlenkschirms 26. Der erste Umlenkschirm 25 bildet an seiner Unterseite eine durchgehende, ununterbrochene Fläche 28, welche im unteren Bereich des Innenraumes 16 im Gehäuse 11 einen Sammelraum 29 begrenzt, in dem Wasser abgeschieden werden kann. Der äußere Rand des ersten Umlenkschirms 25 bildet mit der Innenwand des becherförmigen Gehäuseteils 12 einen schmalen Ringspalt 31, über welchen der Sammelraum 29 nach oben hin mit dem Innenraum 16 Verbindung hat. Ferner ist am Boden des becherförmigen Gehäuseteils 12 zum Entleeren des Sammelraums 29 eine Ablaßschraube 32 angeordnet. Wie die Figur 2 in Verbindung mit Figur 3 und 4 näher zeigt, weist der hohle Befestigungsstutzens 27 drei axial verlaufende Stege 33 auf, zwischen welchen drei Kanäle 34 ausgebildet sind. Diese zum oberen Ende des Befestigungsstutzen 27 hin offenen Kanäle 34 weisen unten Öffnungen 35 auf, die im Bereich zwischen den beiden Umlenkschirmen 25 und 26 liegen. Ferner sind am freien Ende des Befestigungsstutzens 27 federnde Rastnasen 36 ausgebildet, sodass der Wasserabscheider 24 über eine lösbare Rastverbindung gehäusefest gehalten ist. Der Außendurchmesser des zweiten Umlenkschirms 26 ist im Durchmesser wesentlich kleiner gewählt als der erste Umlenkschirm 25, aber doch so groß, dass der durchfließende Kraftstoffstrom eine starke Umlenkung erfährt, die zu einem Ausscheiden von Wassertröpfchen führt. Vorteilhaft beträgt der Außendurchmesser des zweiten Umlenkschirms 26 etwa drei Viertel des Durchmessers des Gehäuseteils 12 an dieser Stelle. Ferner ist der Wasserabscheider 24 in der Lochscheibe 21 so befestigt, dass der erste Umlenkschirm 25 in einigem Abstand von der Lochscheibe 21 liegt und ein Abströmen des vom Filterelement 17 kommenden Druckmittelstroms ermöglicht. Wie die Figur 3 am besten zeigt, kann die Oberseite 37 des zweiten Umlenkschirms 26 leicht geneigt ausgeführt werden, sodass sich dort absetzende Wasserpartikel nach außen zu an den Rand des zweiten Schirms 26 bewegen.

Wie aus Figur 1 in Verbindung mit Figur 2 hervorgeht, ist im Innern des Mittelrohrs 18 ein Glockenteil 39 integriert. Mittelrohr 18 und Glockenteil 39 bilden zusammen ein einstückiges Bauteil, das vorzugsweise aus Kunststoff hergestellt ist. Dieses Glockenteil 39 wird von drei längs des Umfangs gleichmäßig verteilten Längsstegen 41 gehalten, zwischen denen Längskanäle 42 verlaufen. Dieses Glockenteil 39 ist unten offen, sodass der Rohrstutzen 23 mit dem eingesetzten Befestigungsstutzen 27 in es hineinragt. Dabei ist der Innendurchmesser des Glockenteils 39 so groß gewählt, dass der Glockenraum 43 über einen Ringkanal 44 mit den Längskanälen 42 im Mittelrohr 18 Verbindung hat. Ferner steht der Glockenraum 43 an seinem oberen Ende über eine Entlüftungsdrossel 45 mit dem Ablauf - Anschluß 15 in Verbindung.

Die Wirkungsweise der Filtereinrichtung 10 wird wie folgt erläutert, wobei auf die Figuren 1 bis 4 Bezug genommen wird und die prinzipielle Funktion eines Wasserabscheiders als an sich bekannt vorausgesetzt wird.

Der über den Zulauf - Anschluß 14 zufließende Kraftstoff durchströmt axial den Wickel 19 und tritt bei der Lochscheibe 21 gereinigt aus dem Wickel 19 aus. Der gereinigte Kraftstoff strömt durch die Öffnungen in der Lochscheibe 21 und gelangt in den Bereich des Innenraums 16, wo der Wasserabscheider 24 liegt. Der vom Wickel 19 kommende Kraftstoffstrom wird dabei durch den zweiten Umlenkschirm 26 zuerst radial nach außen geführt und erfährt danach eine starke Umlenkung, bevor er radial zwischen beiden Umlenkschirmen 26, 25 nach innen strömt. Über die Öffnungen 35 und die Kanäle 34 im Befestigungsstutzen 27 fließt nun der gereinigte Kraftstoffstrom in den Glockenraum 43. Dort wird er ebenfalls stark umgelenkt und gelangt über den Ringkanal 44 zum unteren Ende des Mittelrohrs 18 und anschließend über dessen Längskanäle 42 zum Ablaufanschluß 15.

Bei dieser Führung des Kraftstoffstroms erfährt er durch den zweiten Umlenkschirm 26 eine starke Umlenkung in einem Bereich, in dem die Strömungsgeschwindigkeit sehr niedrig ist, sodass sich dort Wasserteilchen zu größeren Tröpfchen zusammenschließen und nach unten sinken. Von dem ersten Umlenkschirm 25 gelangen die Wassertröpfchen über den engen Ringspalt 31 in den Sammelraum 29, wo sie gespeichert und von Zeit zu Zeit über die Ablaßschraube 32 entleert werden. Durch die Lage und Anordnung des zweiten Umlenkschirms 26 in Verbindung mit dem ersten Umlenkschirm 25 wird dabei für eine wirksame Wasserausscheidung aus dem Kraftstoff gesorgt, wobei das im Sammelraum 29 abgespeicherte Wasser von der Kraftstoffströmung nicht mehr mitgerissen werden kann.

An der dem zweiten Umlenkschirm 26 zugewandten Oberseite des ersten Umlenkschirmes 25 sich ablagerndes Wasser wird von der kegeligen Fläche des Umlenkschirms 25 zum Ringspalt 31 hin abgeführt, ohne dabei die radial nach innen gerichtete Strömung des Kraftstoffs zwischen beiden Umlenkschirmen 25, 26 zu stören. Da der Ringspalt 31 von dem eigentlichen Kraftstoffstrom nicht mehr durchströmt wird, kann er relativ schmal ausgebildet werden und somit den Sammmelraum 29 mit Wasser gut abschirmen. Durch diese Doppelanordnung von Umlenkschirmen 25, 26 läßt sich ein besonders hoher Abscheidegrad von Wasser erreichen, der auch bei großen Durchflußströmen erhalten bleibt; so kann z. B. ein Abscheidegrad von 93% bei einer Fördermenge von ca. 150 l/h erreicht werden, obwohl der Wasserabscheider mit dem Filter im gleichen Gehäuse in kompakter Weise integriert ist.

Durch die zusätzliche Umlenkung des Kraftstoffstroms in dem Glockenraum 43, aus dem er durch den Ringkanal 44 zum unteren Ende des Mittelrohrs 18 abströmt, werden vor allem Gaseinflüsse, wie z. B. Luftblasen ausgeschieden, die im Glockenraum 43 nach oben steigen und sich dort sammeln. Durch die Entlüftungsdrossel 45 wird diese angesammelte Luft bzw. Gase so fein verteilt zum Ablauf 15 hin abgesaugt, dass diese Gasblasen im gereinigten Kraftstoffstrom die Verbrennung eines Motors nicht mehr stören können.

Selbstverständlich sind an der gezeigten Ausführungsform Änderungen möglich, ohne vom Gedanken der Erfindung abzuweichen. So ist diese Integration eines Wasserabscheiders nicht auf die gezeigte Boxbauart begrenzt, sondern kann auch bei anderen Filterbauarten angewandt werden, wie z. B. bei einer Leitungsfilterbauart. Auch läßt sich der Wasserabscheider mehrgliedrig ausbilden und in anderer Weise im Gehäuse befestigen. Selbstverständlich sind die Vorteile der Wasserabscheidung auch dann erreichbar, wenn in der Filtereinrichtung ein Mittelrohr ohne Glockenteil verwendet wird.

## Patentansprüche

1. Filtereinrichtung (10) zum Abscheiden von Wasser und anderen Verunreinigungen aus flüssigem Kraftstoff mit einem Gehäuse (11), in dessen Innenraum (16) ein Filterelement (17) angeordnet ist, das zwischen zwei Anschlüsse für Zulauf (14) und Ablauf (15) des Kraftstoffes geschaltet ist, mit einem in Einbaulage der Filtereinrichtung im Gehäuse (11) unterhalb des Filterelements (17) angeordneten Sammelraum für Wasser (29) und mit einem zwischen Sammelraum (29) und Filterelement (17) angeordneten Umlenkschirm (25) der an seinem Außenumfang eine die beiden Räume oberhalb und unterhalb des Umlenkschirms (25) miteinander verbindende Öffnung bildet und bei der das Filterelement (17) axial durchströmt ist und ein axial durchströmtes Mittelrohr (18) aufweist, **dadurch gekennzeichnet, dass** im Innenraum (16) zwischen Filterelement (17) und erstem Umlenkschirm (25) ein zweiter Umlenkschirm (26) angeordnet ist, dessen radiale Ausdehnung kleiner ist als diejenige des ersten Umlenkschirms (25) und dass der Kraftstoffstrom auf seinem Weg zwischen Filterelement (17) und Mittelrohr (18) im wesentlichen radial zwischen beiden Umlenkschirmen (25, 26) hindurchgeführt wird.

2. Filtereinrichtung nach Anspruch 1, **dadurch gekennzeichnet, dass** der zweite Umlenkschirm (26) sich im wesentlichen in einer radialen Ebene erstreckt und im Abstand vom ersten Umlenkschirm (25) angeordnet ist.

3. Filtereinrichtung nach Anspruch 1 oder 2, **dadurch gekennzeichnet, dass** der zweite Umlenkschirm (26) im Abstand von dem unteren Ende des Filterelements (17) liegt und einen zentralen Durchlaß (35, 34) für den Kraftstoffstrom aufweist.

4. Filtereinrichtung nach einem der Ansprüche 1 bis 3, **dadurch gekennzeichnet, dass** der erste Umlenkschirm (25) im wesentlichen konisch ausgebildet ist, sodass sich der axiale Abstand zwischen beiden Umlenkschirmen (25, 26) in radialer Richtung gesehen nach innen zu verringert.

5. Filtereinrichtung nach einem der Ansprüche 1 bis 4, **dadurch gekennzeichnet, dass** der erste Umlenkschirm (25) auf der dem Sammelraum (29) zugewandten Seite eine undurchbrochene Fläche (28) aufweist.

6. Filtereinrichtung nach einem oder mehreren der Ansprüche 1 bis 5, **dadurch gekennzeichnet, dass** die beiden Umlenkschirme (25, 26) eine kreisförmige Außenkontur aufweisen, wobei der Durchmesser des zweiten Umlenkschirms (26) erheblich kleiner ist als derjenige des ersten Umlenkschirmes (25), insbesondere etwa drei Viertel von dessen Außendurchmesser aufweist.

7. Filtereinrichtung nach Anspruch 6, **dadurch gekennzeichnet, dass** der erste Umlenkschirm (25) mit der Innenwand des Gehäuses (11, 12) einen insbesondere engen Ringspalt (31) bildet, über den der Sammelraum (29) mit dem oberhalb des ersten Umlenkschirms (25) liegenden Teil des Innenraums (26) verbunden ist.

8. Filtereinrichtung nach einem der Ansprüche 1 bis 7, **dadurch gekennzeichnet, dass** die dem Filterelement (17) zugewandte Oberfläche (37) des zweiten Umlenkschirms (26) eine zum Ablaufen von Wasser geeignete, schwach kegelige Form aufweist.

9. Filtereinrichtung nach einem der Ansprüche 1 bis 8, **dadurch gekennzeichnet, dass** die beiden Umlenkschirme (25, 26) zusammen einen einstückig ausgebildeten Wasserabscheider (24) bilden, der zentral gehäusefest angeordnet ist.

10. Filtereinrichtung nach Anspruch 9, **dadurch gekennzeichnet, dass** die beiden Umlenkschirme (25, 26) einen gemeinsamen, zentralen, hohlen Befestigungsstutzen (27) aufweisen, mit dem sie in einem gehäusefesten Teil (21, 23) befestigt sind.

11. Filtereinrichtung nach Anspruch 9 oder 10, **dadurch gekennzeichnet, dass** im Gehäuse (11) eine Lochscheibe (21) gehäusefest eingesetzt ist, die einen zentralen Rohrstutzen (23) aufweist, in dem der Wasserabscheider (24) mit Hilfe seines Befestigungsstutzens (27) befestigt ist.

12. Filtereinrichtung nach Anspruch 11, **dadurch gekennzeichnet, dass** der Rohrstutzen (23) der Lochscheibe (21) in das Mittelrohr (18) des Filterelements (17) ragt.

13. Filtereinrichtung nach einem der Ansprüche 9 bis 12, **dadurch gekennzeichnet, dass** der Wasserabscheider (24) mit seinem Befestigungsstutzen (27) aus Kunststoff besteht und insbesondere als einstückiges Spritzteil ausgebildet ist.

14. Filtereinrichtung nach einem der Ansprüche 9 bis 13, **dadurch gekennzeichnet, dass** der Wasserabscheider (24) durch eine Rastverbindung (36) lösbar am gehäusefesten Teil (21) befestigt ist.

15. Filtereinrichtung nach einem der Ansprüche 1 bis 14, **dadurch gekennzeichnet, dass** in Strömungsrichtung des Kraftstoffstromes gesehen, der Wasserabscheider (24) dem Filterelement (17) nachgeschaltet ist.

16. Filtereinrichtung nach einem der Ansprüche 9 bis 15, **dadurch gekennzeichnet, dass** die im Befestigungsstutzen (27) verlaufenden Kanäle (34) in Öffnungen (35) enden, die zwischen beiden Umlenkschirmen (25, 26) liegen.

## Claims

1. Filter device (10) for separating water and other impurities out of liquid fuel having a housing (11), in the interior (16) of which there is a filter element (17) which is connected between two connections for inflow (14) and outflow (15) of the fuel, having a collecting space for water (29) arranged, in the installed position of the filter device, in the housing (11) below the filter element (17), and having a deflecting screen (25) which is arranged between the collecting space (29) and filter element (17) and forms, at its external periphery, an opening connecting the two spaces above and below the deflecting screen (25) to one another, and in which device fuel flows through the filter element (17) in the axial direction and the filter element (17) has a central tube (18) through which fuel flows in the axial direction, **characterized in that** a second deflecting screen (26) is arranged in the interior (16) between the filter element (17) and first deflecting screen (25), the radial extent of the said second deflecting screen being smaller than that of the first deflecting screen (25), and **in that** the fuel flow, on its path between the filter element (17) and central tube (18), is passed substantially radially between the two deflecting screens (25, 26).

2. Filter device according to Claim 1, **characterized in that** the second deflecting screen (26) extends substantially in a radial plane and is arranged at a distance from the first deflecting screen (25).

3. Filter device according to Claim 1 or 2,
**characterized in that** the second deflecting screen (26) is at a distance from the lower end of the filter element (17) and has a central passage (35, 34) for the fuel flow.

4. Filter device according to one of Claims 1 to 3, **characterized in that** the first deflecting screen (25) is of substantially conical configuration, so that the axial spacing between the two deflecting screens (25, 26) decreases inwardly as seen in the radial direction.

5. Filter device according to one of Claims 1 to 4, **characterized in that** the first deflecting screen (25) has a continuous surface (28) on the side facing the collecting space (29).

6. Filter device according to one or more of Claims 1 to 5, **characterized in that** the two deflecting screens (25, 26) have a circular outer contour, the diameter of the second deflecting screen (26) being considerably smaller than that of the first deflecting screen (25), in particular being about three quarters of its external diameter.

7. Filter device according to Claim 6, **characterized in that** the first deflecting screen (25) forms an in particular narrow annular gap (31) with the inner wall of the housing (11, 12), via which annular gap the collecting space (29) is connected to the part of the interior (16) lying above the first deflecting screen (25).

8. Filter device according to one of Claims 1 to 7, **characterized in that** the surface (37), facing the filter element (17), of the second deflecting screen (26) has a slightly conical shape suitable for water to run off.

9. Filter device according to one of Claims 1 to 8, **characterized in that** the two deflecting screens (25, 26) together form a water separator (24) which is configured in one piece, is arranged centrally and is attached to the housing.

10. Filter device according to Claim 9, **characterized in that** the two deflecting screens (25, 26) have a common, central, hollow fastening stub (27) with which they are fastened in a part (21, 23) attached to the housing.

11. Filter device according to Claim 9 or 10, **characterized in that** a perforated disc (21) is inserted in and attached to the housing (11), the said perforating disc having a central tubular connection piece (23) in which the water separator (24) is fastened using its fastening stub (27).

12. Filter device according to Claim 11, **characterized in that** the tubular connection piece (23) of the perforated disc (21) projects into the central tube (18) of the filter element (17).

13. Filter device according to one of Claims 9 to 12, **characterized in that** the water separator (24), together with its fastening stub (27), consists of plastic and is configured, in particular, as a single-piece injection-moulded part.

14. Filter device according to one of Claims 9 to 13, **characterized in that** the water separator (24) is releasably fastened, by means of a latching connection (36), to the part (21) attached to the housing.

15. Filter device according to one of Claims 1 to 14, **characterized in that** the water separator (24) is connected downstream of the filter element (17), as seen in the direction of flow of the fuel.

16. Filter device according to one of Claims 9 to 15, **characterized in that** the channels (34) running in the fastening stub (27) end in openings (35) which lie between the two deflecting screens (25, 26).

## Revendications

1. Filtre (10) pour séparer l'eau et d'autres impuretés d'un carburant liquide, comportant un boîtier (11), dans l'espace (16) intérieur duquel un élément (17) de filtre est disposé, interposé entre deux raccordements pour l'arrivée (14) et l'évacuation (15) du carburant, comportant un espace (29) de collecte pour l'eau disposé en dessous de l'élément (17) de filtre en position montée du filtre dans le boîtier (11) et comportant un écran (25) de déviation disposé entre l'espace (29) de collecte et l'élément (17) de filtre qui, à sa périphérie extérieure, forme une ouverture reliant ensemble les deux espaces au-dessus et en dessous de l'écran (25) de déviation, l'élément (17) de filtre étant traversé par le flot dans le sens axial et présentant un tube (18) de milieu traversé par le flot dans le sens axial,
**caractérisé en ce que**
dans l'espace (16) intérieur entre l'élément (17) de filtre et le premier écran (25) de déviation, est disposé un deuxième écran (26) de déviation, dont l'extension radiale est plus petite que celle du premier écran (25) de déviation, et le flot de carburant, sur son chemin entre élément (17) de filtre et tube (18) de milieu traverse de manière essentiellement radiale entre les deux écrans (25, 26) de déviation.

2. Filtre selon la revendication 1,
**caractérisé en ce que**
le deuxième écran (26) de déviation s'étend selon un plan essentiellement radial et est disposé à distance du premier écran (25) de déviation.

3. Filtre selon la revendication 1 ou 2,
**caractérisé en ce que**
le deuxième écran (26) de déviation est disposé à distance de l'extrémité inférieure de l'élément (17) de filtre et présente un passage (35, 34) central pour le flot de carburant.

4. Filtre selon l'une quelconque des revendications 1 à 3,
**caractérisé en ce que**
le premier écran (25) de déviation est de forme essentiellement conique, si bien que l'écartement axial entre les deux écrans (25, 26) de déviation, vu dans le sens radial, diminue vers l'intérieur.

5. Filtre selon l'une quelconque des revendications 1 à 4,
**caractérisé en ce que**
le premier écran (25) de déviation présente, sur la face dirigée vers l'espace (29) de collecte, une surface (28) ininterrompue.

6. Filtre selon une ou plusieurs des revendications 1 à 5,
**caractérisé en ce que**
les deux écrans (25, 26) de déviation présentent un contour extérieur de forme circulaire, le diamètre du deuxième écran (26) de déviation étant nettement plus petit que celui du premier écran (25) de déviation et en particulier correspond aux trois quarts de son diamètre extérieur.

7. Filtre selon la revendication 6,
**caractérisé en ce que**
le premier écran (25) de déviation forme, avec la paroi intérieure du boîtier (11, 12) une fente (31) annulaire en particulier étroite, par laquelle l'espace (29) de collecte est relié avec la partie de l'espace (26) intérieur figurant au-dessus du premier écran (25) de déviation.

8. Filtre selon l'une quelconque des revendications 1 à 7,
**caractérisé en ce que**
la surface (37) dirigée vers l'élément (17) de filtre du deuxième écran (26) de déviation présente une forme adaptée à l'écoulement de l'eau, légèrement conique.

9. Filtre selon l'une quelconque des revendications 1 à 8,
**caractérisé en ce que**
les deux écrans (25, 26) de déviation forment ensemble un séparateur (24) d'eau constitué de manière monobloc, disposé de manière centrale et fixe par rapport au boîtier.

10. Filtre selon la revendication 9,
**caractérisé en ce que**
les deux écrans (25, 26) de déviation présentent une tubulure (27) de fixation, creuse, centrale et commune, par laquelle ils sont fixés à une pièce (21, 23) fixe par rapport au boîtier.

11. Filtre selon la revendication 9 ou 10,
**caractérisé en ce que**
dans le boîtier une plaque (21) à trous est adaptée de manière fixe par rapport au boîtier, présentant un manchon (23) tubulaire central auquel le séparateur (24) d'eau est fixé à l'aide d'une tubulure (27) de fixation.

12. Filtre selon la revendication 11,
**caractérisé en ce que**
le manchon (23) tubulaire de la plaque (21) à trous pénètre dans le tube (18) de milieu de l'élément (17) de filtre.

13. Filtre selon l'une quelconque des revendications 9 à 12,
**caractérisé en ce que**
le séparateur (24) d'eau avec sa tubulure (27) de fixation est en plastique, et en particulier d'une seule pièce injectée.

14. Filtre selon l'une quelconque des revendications 9 à 13,
**caractérisé en ce que**
le séparateur (24) d'eau est fixé par une liaison (36) par enclenchement, de manière dissociable, à la pièce (21) fixe par rapport au boîtier.

15. Filtre selon l'une quelconque des revendications 1 à 14,
**caractérisé en ce que**
vu dans le sens d'écoulement du flot de carburant, le séparateur (24) d'eau est en aval de l'élément (17) de filtre.

16. Filtre selon l'une quelconque des revendications 9 à 15,
**caractérisé en ce que**
les canaux (34) tracés dans la tubulure (27) de fixation se terminent en ouvertures (35) qui débouchent entre les deux écrans (25, 26) de déviation.
